Europäisches Patentamt

European Patent Office

Office européen des brevets

(11) Publication number: **0 495 655 B1**

## EUROPEAN PATENT SPECIFICATION

(45) Date of publication of patent specification: **08.11.95**

(51) Int. Cl.⁶: **B29C 65/00**, C08J 5/12, C09J 5/02

(21) Application number: **92300368.5**

(22) Date of filing: **16.01.92**

(54) **Joining method.**

(30) Priority: **18.01.91 GB 9101099**
**29.04.91 GB 9109176**
**18.10.91 GB 9122156**

(43) Date of publication of application:
**22.07.92 Bulletin 92/30**

(45) Publication of the grant of the patent:
**08.11.95 Bulletin 95/45**

(84) Designated Contracting States:
**AT CH DE ES FR GB IT LI NL SE**

(56) References cited:
**US-A- 3 303 954**
**US-A- 4 386 991**
**US-A- 4 753 708**

(73) Proprietor: **THE WELDING INSTITUTE**
**Abington Hall**
**Abington**
**Cambridge CB1 6AL (GB)**

(72) Inventor: **Wise, Roger Jeremy**
**130 Exning Road**
**Newmarket,**
**Suffolk CB8 0AF (GB)**

(74) Representative: **Skone James, Robert Edmund**
**GILL JENNINGS & EVERY**
**Broadgate House**
**7 Eldon Street**
**London EC2M 7LH (GB)**

Rank Xerox (UK) Business Services
(3.10/3.09/3.3.3)

**Description**

This invention relates to a method of joining members, particularly but not exclusively comprising dissimilar materials.

Conventional methods of joining dissimilar materials include mechanical fasteners such as bolts and rivets and adhesive bonding. Mechanical fasteners provide an attachment of a known strength at discrete points over the joint. A major disadvantage with this is that mechanical stress applied to the joint is concentrated at the discrete points where the fasteners are situated rather than being spread evenly over the whole joints. They are also inelegant and do not, in general, provide a sealed joint. Adhesively bonded joints (thermosets) spread mechanical stress over the whole joint area but generally are not applicable to components expecting to operate at temperatures above 120°C. US-A-3303954 describes a method of joining foamed polystyrene to a metal using a lacquer, varnish or aqueous polymeric dispersion. In this case, a bond is achieved by initially roughening the surface of the polystyrene. This method is specific to the bonding of foamed polystyrene and is not generally applicable.

US-A-4753708 describes a method of joining two substrates together by applying a thermoplastic coating to a surface of at least one of the substrates, from a thermoplastic material in solution, applied to the surface of the substrate and thereafter deposited out of solution on to the surface so that the two substrates are joined via the coating. This method is concerned with providing heat sealable foils, by coating a metal with a thermoplastic.

US-A-4386991 describes bonding members using a single coating on one of the members to be joined which allows bonding at temperatures below the softening point of the material of the members to be joined. This prior art method is not intended to operate at elevated temperatures because, to do so would cause damage to the material of the members to be joined.

In accordance with the present invention, a method of joining members comprises applying a thermoplastic coating to a surface of at least one of the members by applying thermoplastic material in solution to the surface and thereafter depositing the thermoplastic material out of solution on to the surface by solvent evaporation; and joining the at least one member via the thermoplastic coating to another member, characterised in that the joining is effected by providing additional thermoplastic material between the members and welding at an elevated temperature such that fusion occurs at the respective joint lines between the thermoplastic coating, the thermoplastic material and the other member.

Examples of members which can be joined using this technique include metal to thermoplastic, for example, APC-2(peek/carbon composite) to L113 grade aluminium alloy; metal to ceramic (for example alumina to L113 grade aluminium alloy); metal to metal (for example L113 grade aluminium alloy to a coupon of similar material); ceramic to ceramic (for example silicon carbide reinforced borosilicate glass composite to a coupon of similar material); ceramic to thermoplastic, for example, Cetex (PEI/Aramid composite) to alumina; thermoplastic to thermoset (for example, APC-2 to Hercules 3501 epoxymatrix carbon fibre composite); and thermoplastic composite to wood.

The key to the successful bonding method is the ability to deposit the thermoplastic material out of solution onto the surface of the member. This enables a strong bond to be achieved between the thermoplastic material and the member following which a good bond can then be achieved between the thermoplastic coating and the other member.

The choice of polymer coating and solvent will be determined with the aid of certain rules based on the fact that polymers have molecules which are either polar or non-polar. Polar based polymers have molecules which tend to align themselves with an externally applied electric field (for example PVC). These materials tend to have molecules which are not symmetrical i.e. they possess a dipole moment. Guide lines for determining suitable combinations of thermoplastic materials and solvents can then be set out as follows:

(i) Polar based polymers can in general be swollen or dissolved by a strong polar based or halogenated solvent.

Example: PEI in trichloroethane.

(ii) Non polar based polymers can in general be swollen or dissolved by a strong non polar based or halogenated solvent.

Example: EPDM in toluene or benzene.

(iii) Strong halogenated solvents can usually be used to dissolve both polar and non polar based polymers.

Example: EPDM in chloroform.

A joint could be made between a coated metal member and a thermoplastic member but in other cases the thermoplastic member comprises a thermoplastic coating provided on a metal member.

In some cases, particularly where the member to be coated is a metal, the step of providing a coating of thermoplastic material includes a step of pre-treating the metal member and thereafter providing the coating. This pre-treatment of the surface may take a variety of forms depending upon the material under consideration. For metals this can include grit blasting or anodizing. The pretreatment step is not limited to metals and may be applied to other materials. For thermoplastic composite ceramics it may be degreasing. However, in the case of ceramics, a pretreatment may not be necessary.

The joining step may comprise any suitable plastics joining technique, for example, hot gas welding, vibration welding, ultrasonic welding, spin welding, microwave welding, resistance implant welding, dielectric welding, induction welding, or extrusion welding.

Three preferred techniques include resistive implant welding (e.g. aluminium alloy to APC-2), induction welding (e.g. APC-2 to hercules 3501 thermosetting composite) and baking (e.g. alumina to cetex aramid composite). The arrangement of the equipment is very important to the success of the joint because one requirement is that where possible the heat should be concentrated at the joint line. This is particularly important when one or other of the members being joined is affected by the temperatures associated with making the joint. E.G. for the APC-2 to aluminium alloy weld, the coating melts at over 250°C and this is hot enough to cause annealing in the aluminium alloy.

Some examples of joining metal and thermoplastic members and members of dissimilar materials in accordance with the present invention will now be described with reference to the accompanying drawings, in which:-

Figure 1 shows two pretreated materials being joined;

Figure 2 shows a welding arrangement in detail;

Figure 3 shows a composite manufactured using pretreated materials;

Figures 4 and 5 illustrate the alignment of fibres in layers 12 and 13 respectively of Figure 3;

Figure 6 is a scanning electron micrograph showing the surface of aluminum alloy after anodizing;

Figure 7 is a scanning electron micrograph showing the surface of the aluminium alloy after anodizing and coating with PES;

Figure 8 illustrates an assembled lap shear joint;

Figure 9 is a schematic section of the lap shear joint; and,

Figure 10 illustrates the dimensions of a shear test sample.

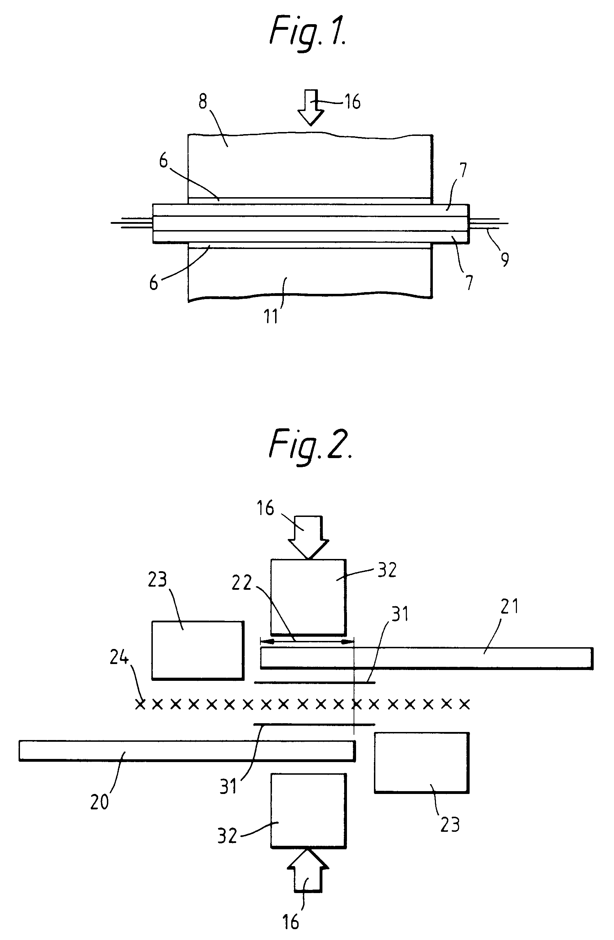

Figure 1 illustrates two materials to be joined 8,11, eg a metal and a ceramic. At least the metal 8 has been surface pretreated and then both materials have been coated with a polymer coating 6. A prepreg insert including carbon fibres 9 covered by polymer films 7 is placed between the two materials 8,11. The joint is effected by passing an electric current down the carbon fibres 9 in the prepreg insert. The current causes resistive heating of the polymer films 7 which fuse to the polymer coating 6 on the surface of each piece of material 8,11 to be joined. The heating is to a temperature of approximately 300°C under a pressure 16 of 1.3 $N/mm^2$ and for a total weld time of 40 seconds.

The polymer coating 6 (e.g. polyetherimide (PEI) or polyethersulphone (PES), generally a thermoplastic coating) is applied in liquid form having been dissolved in a suitable solvent mixture, e.g. 48% by volume 1,1,2-trichloroethane + 48% by volume Dichloromethane + 4% by volume Methanol. The solvent subsequently evaporates leaving the polymer coating 6 on the material surface.

In the case of aluminium alloy the pretreatment may be by an "unsealed anodized" method which involves immersing the specimen in a bath of a suitable acid held at constant temperature. An electric current then flows through the acid from the specimen to another electrode. The effect on the surface of the specimen is to produce pores on a microscopic scale to which the thermoplastic coating 6 can adhere to produce a strong interface.

Other metallic materials to be joined to thermoplastic include steel and titanium which can be subjected to an appropriate pretreatment step.

Experiments have achieved joint strengths (Lap Shear) in the order of 30 $N/mm^2$ between Al alloy and APC2 thermoplastic composite.

Example 1

A more detailed example will be described with reference to Figure 2.

A specimen of aluminium alloy (grade L113) of dimensions 1.6 mm x 25 mm x 100 mm was pretreated according to a specific schedule. The chemical composition of the aluminium alloy L113, was as shown in Table 1 hereinafter.

The pretreatment schedule for the aluminium alloy was as follows:-

EP 0 495 655 B1

i) The alloy was cleaned in a tank of 10% by volume Oakite NST (available from Oakite Limited) at a temperature of 55°C for 5 minutes, then washed in mains water.

ii) The alloy was then pickled in an etch comprising 50 grammes/litre (of water) chrome trioxide and 300 grammes/litre (of water) sulphuric acid. This liquid was kept at 65°C and the immersion time for the alloy was 15 minutes. The pickled alloy was then washed in mains water.

iii) Next the alloy was anodized in a bath of 10% by weight orthophosphoric acid at room temperature using an anodizing voltage of 10V for 25 minutes, then washed in mains water.

After this the alloy was rinsed in deionised water, surplus water was removed and the alloy dried in an oven at 50°C.

Following the pretreatment step, the alloy was coated in a layer of thermoplastic polyethermide (PEI which is available from GE plastics as "Ultem"). The coating was supplied from a solvent solution prepared in the following way:- A solvent mixture of 48% Dichloromethane, 48% 1,1,2 - Trichloroethane, and 4% Methanol was made up (all proportions by volume).

To 40 cc of this solvent mixture was added 4 grammes of PEI which dissolved after a few minutes.

The resultant liquid was painted onto the surface of the aluminium alloy using a paintbrush immediately after the completion of the pretreatment. This method of coating is known to produce a plastic layer of non-uniform thickness over the surface of the alloy. A single coating has been measured as being between 2 and 5μm in depth by a scanning electron microscope. The solvents evaporate from the surface of the alloy leaving a solid plastic coating.

The coated aluminium alloy 20 (Figure 2) is then ready to be joined to a piece of thermoplastic composite material such as a member 21 made of APC-2 (available from ICI Plc). This member 21 is made from carbon fibres (AS4 grade available from Hercules) set in a matrix of thermoplastic polyetheretherketone (Peek).

The member 21 which was joined to the coated aluminium alloy 20 was 2mm x 25 mm x 100 mm and was consolidated from 16 layers of 0.125 mm thick unidirectional tape in a configuration known as quasi-isotropic. One 25 mm x 100 mm face of the APC-2 member 21 has a 75μm layer of PEI consolidated onto its surface. The coated aluminium alloy 20 and APC-2 member 21 were then placed in a welding jig, comprising asbestos blocks 32, which allowed a joint overlap 22 of 12.7 mm. This was in order to permit manufacture of a welded structure suitable for testing according to the lap shear testing standard ASTM-D1002-72.

An electric welding current was passed between copper bus bars 23, through carbon fibre preimpregnated tape 24 which had previously been subjected to a flame in the region of connection to the bus bars 23. This had the effect of baring the carbon fibres locally while leaving plastic impregnation 31 around the fibres in the region of the weld.

The welding current was applied in three stages, a 10 second ramp up stage, a 10 second constant current stage and a 10 second ramp down stage. During the constant current stage a constant current of 40A was applied. A pressure of 2.7 N/mm$^2$ 16 was applied via the asbestos blocks 32 and consolidated (cooled) for 3 seconds before removal from the jig, to produce a lap shear strength of 32 MPa.

EXAMPLE 2

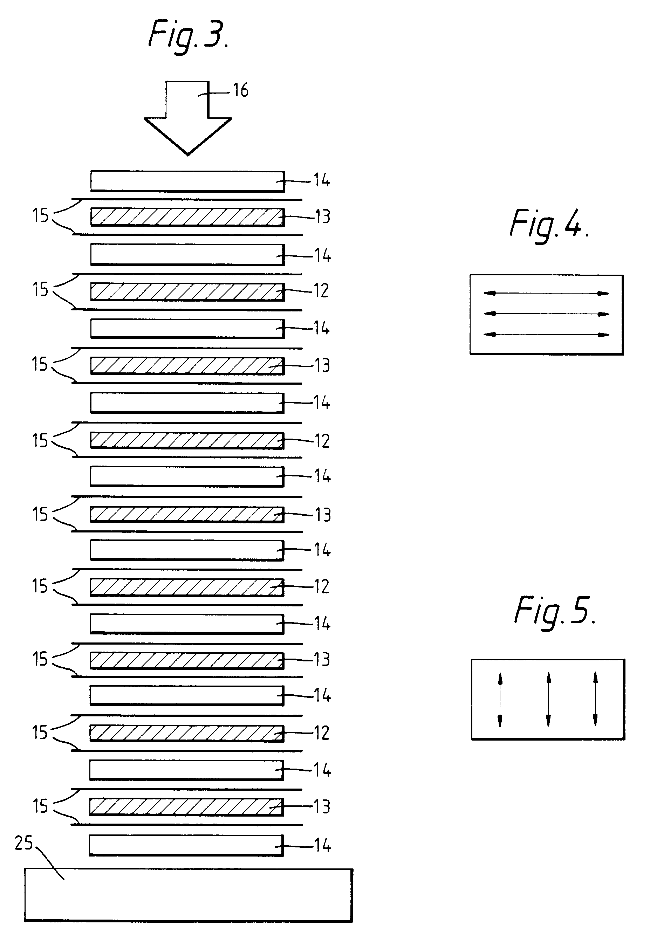

The above technique may be used to manufacture a composite material as shown in Figure 3.

Ten pieces of alumina ceramic 14 of dimensions 100 mm x 150 mm x 0.625 mm were coated in PEI by a technique identical to Example 1 but without the pretreatment stage i.e. 4grams of PEI were dissolved in the solvent mixture previously described and then applied to the alumina ceramic 14 with a paint brush. When the solvent evaporated, a coating of solid PEI remained. For this example, two coatings were applied.

Nine pieces of unidirectional kevlar reinforced PEI composite tape 12,13 (available from Ten Cate under the trade name Cetex) were cut to a size of 10 mm x 150 mm x the thickness of the tape and placed between alternate sheets of alumina ceramic 14. The alignment of the fibres in layers 12 and 13 was as shown by Figures 4 and 5 respectively i.e. each layer of kevlar tape was at 90° to the layer of kevlar tape either side of it in this construction. The Kevlar tape and alumina ceramic sheets were interleaved with polymer films 15. This plastic composite/ceramic sandwich was then mounted on an alignment jig 25, itself constructed from machineable ceramic (pyrophyllite from Morgan Matroc).

This sandwich of 10 layers of alumina ceramic 14 and 9 layers of PEI/kevlar composite 12,13 was then placed in an oven at 300°C for 1 hour while under a pressure 16 of 0.01 N/mm$^2$. The adhesion of the materials appeared to be very good although no direct mechanical tests were attempted.

Alternatively the alumina ceramic 14 may be degreased before being coated from solution with polymer.

4

An alternative orientation of the prepreg is an arrangement of 0°/90°/0°/0°/90°/0° in the layers. This arrangement is repeated to achieve the desired thickness of composite.

Composite materials may be manufactured from thermoplastic composite to ceramic, thermoplastic composite to metal, ceramic to metal or other material combinations using the same technique.

Some further work will now be described in which various combinations of materials were joined.

The aim of this work was to produce joints between the continuous carbon fibre reinforced thermoplastic composite material APC-2 and aluminium alloy. However, joints were also made between other dissimilar material combinations including carbon fibre thermoplastic composite to alumina ceramic and aluminium alloy to allumina ceramic.

The continuous carbon fibre reinforced thermoplastic composite APC-2 was used in all welding trials involving thermoplastic composites. This material comprises 61% by volume carbon fibres in a thermoplastic matrix of polyetheretherketone (PEEK). ICI make this material in the form pre-impregnated (prepreg) tape 0.125mm thick and layers of this tape are processed, by end users of the material, under a suitable pressure and temperature schedule to produce consolidated laminates. The prepreg tape contains continuous fibres all running in the same direction within the thermoplastic matrix. In order to produce consolidated structures of a predetermined stiffness and strength, it is possible to orientate the direction of the tapes such that fibres in one tape layer make a known angle with fibres in the adjacent tape layers. The relative orientations of fibres in the layers is known as the "lay up" of the consolidated composite.

The composite lay up of the APC-2 material employed in the welding trials was 0°/45°/90°/-45°/0°/45°/90°/-45°/-45°/90°/45°/0°/-45°/90°/45°/0°, a lay up known as quasi-isotropic. Material specimens were 2mm thick by 100mm long and 25mm wide as prescribed by the lap shear testing standard ASTM D1002-72. The fibre type was Hercules AS4.

In addition to the 16 plys of unidirectional carbon fibre prepreg tape, some of the specimens had a layer of the amorphous polymer polyetherimide (PEI) co-moulded onto one surface. This layer plays an important role in the amorphous bonding technique sometimes used for induction welding of APC-2 as previously described.

Several grades of aluminium alloy material were used in the welding trials. The chemical analyses of these materials are presented in Table 1.

Joints involving three ceramic materials were investigated and these materials were alumina, aluminium nitride and a silicon carbide reinforced borosilicate glass composite.

The alumina was 99.5% pure with the impurities comprising silicon oxide, magnesium oxide, iron oxide and calcium oxide. The aluminium nitride ceramic was 97% pure (by weight) with 3% of yttria. Both of these ceramics were used in the form of tiles having dimensions 1mm x 25mm x 50mm.

The composition of the borosilicate glass matrix of the silicon carbide composite is presented in Table 2 (analysis supplied by Pilkington plc).

Aluminium alloy may be pre-treated by using a technique called unsealed anodising. The pretreatment involves immersing the material in an acid bath maintained at constant temperature and passing an electric current through the acid from the aluminium material to another electrode.

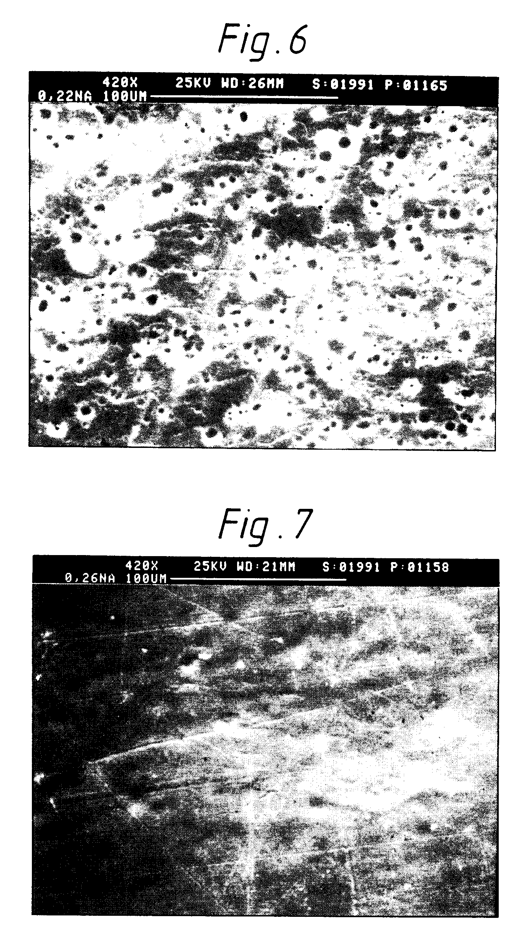

This results in a porous oxide layer forming on the surface of the aluminium alloy (Fig. 6). Some form of acid agitation is required to ensure an even growth of the surface oxide layer and this is usually provided by passing air bubbles continuously through the bath.

It is possible to use various acid concentrations and types to create the surface oxide layer, and pretreatments using phosphoric, chromic and sulphuric acid are all well documented in the literature For these welding trials, a bath of 15% sulphuric acid at a temperature of 20-24° was used.

Unsealed anodised specimens were coated with plastic as soon as possible after the pretreatment because the pores tend to seal themselves within hours of being produced, due to the effects of air and moisture.

In order to coat the anodised aluminium alloy, thermoplastic material was first dissolved in an organic solvent liquid. Certain plastics may be dissolved in this way and two examples of these are polyetherimide (PEI) and polyethersulphone (PES). The solvent mixture used to accomplish this was 50% dichloromethane and 50% 112 trichloroethane although 4% methanol was added in cases where a solution of low viscosity needed to be prepared quickly.

Plastic material was added to 40cm$^3$ of this solvent mixture in the proportions 2.5 grammes of PEI or 4 grammes of PES (Grade 3600P or 5003P). The plastic powder was dried in a vacuum oven at 150° for 3 hours being dissolved in the solvent mixture.

The solvent and polymer mixtures appeared as transparent colourless (PES) or yellow tinted (PEI) liquids with the approximate viscosity of water. The pretreated aluminium alloy samples were wetted with one or other of the liquids by application with a paint brush. Evaporation of the solvent was accelerated by placing the samples on a warm hot plate in a fume cupboard.

In this way, a very thin plastic coating was formed on the surface of the aluminium alloy and polymer was assumed to penetrate the pores produced by anodizing (Fig. 7).

Aluminium lithium alloy (RL30 Table 1) was also coated with plastic after having been grit-blasted. This material was not anodised because insufficient information was available about the mechanical properties of the resultant surface oxide layer.

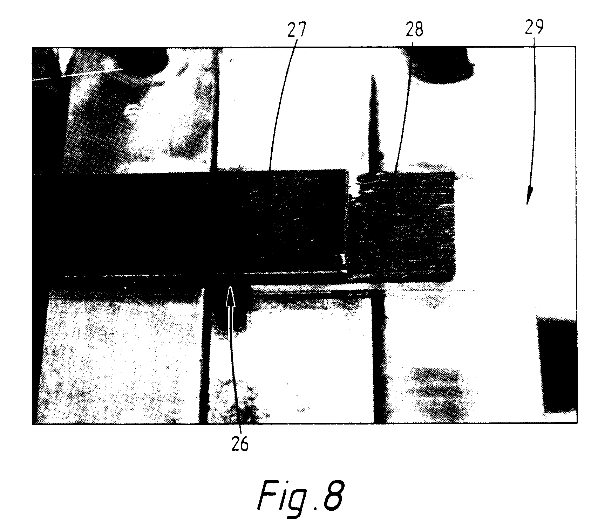

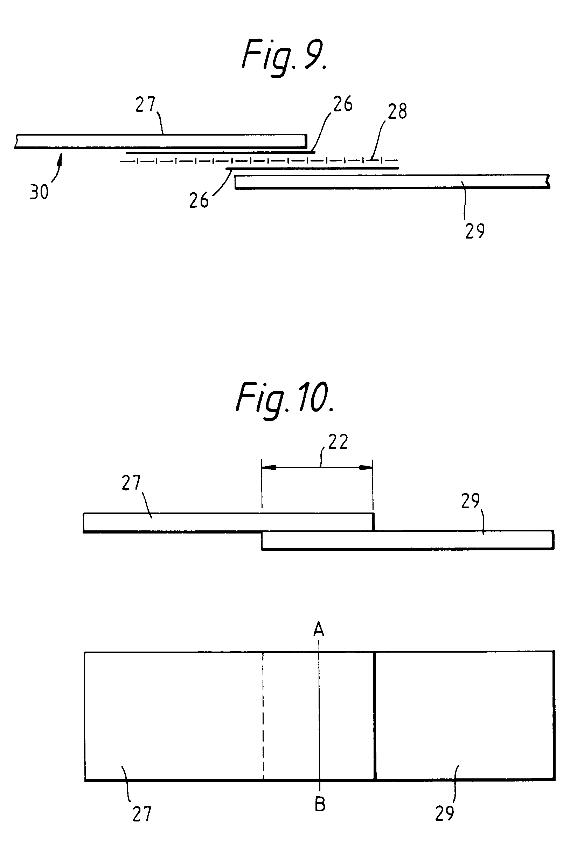

At this stage several conventional plastic joining techniques could have been considered to join APC-2 material to the coated metal, for example, hot plate welding or induction welding. However, the technique selected was resistive implant welding using a piece of unidirectional carbon fibre prepreg tape as the implant material. The glass transition temperature for PES is 225°C and 230°C for PEI, but the temperature required to make a weld is probably over 300°C. At this temperature there is a tendency for the aluminium alloy to lose its mechanical stiffness due to annealing. For this reason a process which concentrated the heat at the weld joint was required and this was guaranteed by the resistive implant technique. Figures 8 and 9 show an assembled shear joint prior to welding. The resistive implant material 28 was sandwiched between two pieces of extra film material 26 100$\mu$m thick and placed between an APC-2 specimen 27 and an aluminium alloy specimen 29 coated with PES or PEI. This film material 26 was selected to match the adjacent coating or composite matrix material of the aluminium alloy 29 or APC-2 specimen 27 respectively. The film 26 adjacent to the APC-2 specimen 27 was either PEEK to match the composite matrix material or PEI to match a special surface layer 30 which may be co-moulded to the composite to allow joining by the amorphous bonding technique.

The implant 28 was resistively heated and pressure applied.

Heating current was supplied by one of two power supplies, the Kikusui unit (C531) capable of 30A DC maximum or a McGregor unit (B187) which was capable of at least 160A D.C.

The welding current was supplied in three stages, a ramp up stage, a peak current stage and a ramp down stage. Peak welding current was applied in the range 20A to 50A and weld pressure in the range 1.4 to 8.0 N/mm$^2$. Although all of the anodising took place in sulphuric acid, joints were made using material with pore depths in the range 5 to 21$\mu$m as measured by the subcontractor.

Welds were also made between the following material combinations:
- APC-2 and alumina ceramic
- aluminium alloy and alumina ceramic
- aluminium alloy and aluminium nitride ceramic
- Si-carbide reinforced borosilicate glass composite to itself.

In each case the technique of coating the ceramic and metallic parts with a plastic dissolved in a solvent mixture, was followed.

No surface pretreatment was required for the ceramic specimens since they were able to provide sufficient keying for the plastic in their untreated state.

Samples suitable for lap shear testing were produced as shown in Fig.10. These samples were lap shear tested at room temperature using an Avery-Denison universal testing machine (Type 7152) at a cross head displacement rate of 5 mm/min. The jaws were 2mm offset so that the tensile forces were parallel to each half of the welded specimen. The shear strength of the weld was calculated by dividing the maximum failure force achieved by the original overlap area. The dimensions of the samples were 101.6 mm x 25.4 mm x 2 mm with an overlap 22 of 12.7 mm. Anodised and coated specimens were examined using a scanning electron microscope.

Untested welds were examined visually, both externally and by sectioning and polishing. Sections were taken at 90° to the length of the specimen (Fig. 10), at the position AB.

Results

a) APC-2 to Aluminium Alloys

The best result of trials conducted on aluminium lithium alloy is given in Table 3. The lap shear strength of this weld (RL27) was 13.7N/mm$^2$ and was achieved on a specimen which had been grit-blasted and coated with PES.

Welding trials continued with some L113 grade aluminium alloy which was unsealed anodized to a depth of 20$\mu$m. The strongest joints were achieved using the 5003P PES coating material with PEI film between the APC-2 prepreg implant and the APC-2 bulk specimen material (with consolidated PEI layer at the surface). This combination produced the lap shear specimen displaying the greatest strength which was weld RL48 at 29.6N/mm$^2$. (Table 3).

Weld RL79 was similar to weld RL48 except that the plastic coating was PEI applied 36 hours after the unsealed anodised samples had been received. The lap shear strength was zero and there was virtually no adhesion to the aluminium alloy.

Weld RL82 was again similar to weld RL48 except that the depth of anodising was reduced to $8\mu$m. The lap shear strength of this joint was 28.2N/mm$^2$ and the failure was at the coating and in the APC-2 prepreg material.

b) <u>Joints made between other Dissimilar Materials</u>

Joints were made between a variety of dissimilar materials, APC-2 to alumina ceramic, aluminium alloy to alumina ceramic aluminium alloy to aluminium nitride ceramic and the silicon carbide/borosilicate glass composite material to itself Lap shear tests for each combination were attempted but the ceramics broke, but the ceramics broke in the jaws of the test machine leaving the PCM joint intact.

Of the lap shear specimens produced, the best results were achieved using PES as the coating material and anodizing depths of between 5 and 21$\mu$m in aluminium alloy. Inferior lap shear strengths were achieved when the aluminium alloy surface pretreatment comprised grit blasting and coating with PEI. The effects of using specimens anodised in different acid, eg phosphoric or chromic acid are as yet unmeasured although they are expected to improve the lap shear strength of joints further by virtue of the fact that the resulting surface pores are known to be of a larger diameter than those produced by sulphuric acid anodising.

# Table 1  Material Analyses - Aluminium alloys (Percentage by weight)

| Ref No. | C | S | P | Si | Mn | Ni | Cr | Mo | V | Cu | Nb |
|---|---|---|---|---|---|---|---|---|---|---|---|
| RL30 (Al Li alloy) 5/91/172 | | | | <0.01 | <0.01 | <0.01 | <0.01 | | | 1.19 | |
| L113 CAA Cert. 292 | | | | 0.96 | 0.49 | | 0.04 | | | 0.03 | |

## Table 1 (continued)

| Ref N | Ti | Al | B | Sn | Co | As | Ca | Pb | Zr | Fe | Mg | Zn | Li |
|---|---|---|---|---|---|---|---|---|---|---|---|---|---|
| RL30 (Al Li alloy) 5/91/172 | 0.03 | bal | | <0.01 | | | | <0.05 | 0.13 | 0.07 | 0.55 | 0.01 | 2.33 |
| L113 CAA Cert. 292 | 0.17 | bal | | | | | | | | 0.33 | 1.0 | 0.01 | |

EP 0 495 655 B1

TABLE 2

| COMPOSITION OF THE BOROSILICATE GLASS MATRIX OF THE SILICON CARBIDE COMPOSITE USED IN JOINING TRIALS | | | | | | |
|---|---|---|---|---|---|---|
| | $SiO_2$ | $B_2O_3$ | $Al_2O_3$ | CaO | $Na_2O$ | $K_2O$ |
| % Weight | 80.21 | 12.3 | 2.57 | 0.1 | 4.47 | 0.3 |

TABLE 3 SELECTED RESULTS OF LAP SHEAR TESTS FOR RESISTANCE IMPLANT WELD

USING APC-2 PRE-PREG AND DISSIMILAR MATERIALS

| Specimen | Weld Time (Secs) | | | Peak Current (A) | Pressure (N/mm²) |
|---|---|---|---|---|---|
| | Up | Peak | Down | | |
| RL 27 Al Li alloy AS4/APC-2 | 20.0 | 50.0 | 0 | 30 | 1.34 |
| RL 48 L113 AS4/APC-2 | 10.0 | 10.0 | 10.0 | 40 | 2.67 |
| RL 79 L113 AS4/APC-2 | 10.0 | 10.0 | 10.0 | 35 | 2.67 |
| RL 82 L113 AS4/APC-2 | 0 | 12.0 | 20.0 | 40 | 2.67 |

EP 0 495 655 B1

Table 3 (continued)

| Specimen | Film | Film | Specimen | Lap shear Strength |
|---|---|---|---|---|
| RL27 Al Li alloy grit blast + PEI | 100μm PEI | 100μm PEI | AS4 APC-2 +PEI layer | 13.7Nmm² (coating to Al Li) |
| RL48 L113 + 20μm anodize 5003P PES | 100μm PES | 100μm PEI | AS4 APC-2 + PEI layer | (Failure Type) 29.6 N/mm² (coating to metal) |
| RL79 L113 + 21μm anodize + PEI | 100μm PEI | 100μm PEEK | AS4 APC-2 | ON/mm² (coating to L113) |
| RL88 L113 +8μm anodize + 5003P PES | 100μm PES | 100μm PEEK | AS4 APC-2 | 28.8N/mm² (pre-preg & coating to metal) |

## Claims

1. A method of joining members (8,11), the method comprising applying a thermoplastic coating (6) to a surface of at least one of the members (8,11) by applying thermoplastic material in solution to the

10

EP 0 495 655 B1

surface and thereafter depositing the thermoplastic material out of solution onto the surface by solvent evaporation; and joining the at least one member (8,11) via the thermoplastic coating (6) to another member; characterised in that the joining is effected by providing additional thermoplastic material between the members, and welding at an elevated temperature such that fusion occurs at the respective joint lines between the thermoplastic coating, the thermoplastic material and the other member.

2. A method according to claim 1, wherein the members (8,11) comprise dissimilar materials.

3. A method of joining members (8,11) according to claim 1 or claim 2, wherein the members comprise a metal and a thermoplastic.

4. A method according to claim 3, wherein the thermoplastic member comprises a thermoplastic coating provided on a metal member.

5. A method according to claim 3 or claim 4, wherein a thermoplastic is provided on a metal member by a method including a step of pretreating the metal member and thereafter providing the coating.

6. A method according to any of claims 3 to 5, wherein the metal member comprises an aluminium alloy.

7. A method according to any of claims 3 to 6, wherein the additional thermoplastic material includes a polymer coated resistance implant insert provided between the thermoplastic member and the thermoplastic coating fusion of the polymer coatings to the thermoplastic member and thermoplastic coating occuring due to resistive heating of the insert.

8. A method according to any of claims 5 to 7, wherein the pretreatment comprises an anodizing process.

**Patentansprüche**

1. Verfahren zum Verbinden von Teilen (8, 11), bei dem ein thermoplastischer Überzug (6) auf einer Oberfläche Wenigstens eines der Teile (8, 11) aufgebracht wird, indem ein thermoplastisches Material in Lösung auf der Oberfläche aufgetragen und danach das thermoplastische Material ungelöst auf der Oberfläche durch Lösungsmittelverdampfung aufgebracht wird; und das erwähnte eine Teil (8, 11) durch den thermoplastischen Überzug (6) mit einem anderen Teil verbunden wird, dadurch gekennzeichnet, daß das Verbinden durch Anordnung eines zusätzlichen thermoplastischen Materials zwischen den Teilen und Verschweißung bei erhöhter Temperatur bewirkt wird, so daß eine Verschmelzung in den jeweiligen Verbindungslinien zwischen dem thermoplastischen Überzug, dem thermoplastischen Material und dem anderen Teil erfolgt.

2. Verfahren nach Anspruch 1, bei dem die Teile (8, 11) unterschiedliche Materialien aufweisen.

3. Verfahren zum Verbinden von Teilen (8, 11) nach Anspruch 1 oder 2, bei dem die Teile ein Metall und einen Thermoplasten aufweisen.

4. Verfahren nach Anspruch 3, bei dem das thermoplastische Teil einen thermoplastischen Überzug auf einem Metallteil aufweist.

5. Verfahren nach Anspruch 3 oder 4, bei dem ein Thermoplast auf einem Metallteil durch ein Verfahren aufgebracht wird, bei dem zunächst das Metallteil vorbehandelt und danach der Überzug aufgebracht wird.

6. Verfahren nach einem der Ansprüche 3 bis 5, bei dem das Metallteil eine Aluminiumlegierung aufweist.

7. Verfahren nach einem der Ansprüche 3 bis 6, bei dem das zusätzliche thermoplastische Material einen mit einem Polymer überzogenen Widerstandsimplantateinsatz aufweist, der zwischen dem thermoplastischen Teil und der thermoplastischen Überzugsverschweißung der Polymerüberzüge mit dem thermoplastischen Teil vorgesehen wird, und bei dem die Ausbildung des thermoplastischen Überzugs infolge Widerstandserwärmung des Einsatzes erfolgt.

11

EP 0 495 655 B1

8. Verfahren nach einem der Ansprüche 5 bis 7, bei dem die Vorbehandlung einen Anodisierungsprozeß umfaßt.

**Revendications**

1. Procédé d'assemblage de pièces (8, 11), le procédé comportant l'application d'un revêtement thermoplastique (6) sur une surface d'au moins une des pièces (8, 11), par application d'un matériau thermoplastique en solution sur la surface, suivie d'un dépôt du matériau thermoplastique à partir de la solution sur la surface par évaporation du solvant; et assemblage de la pièce (8, 11) au moins présente avec une autre pièce, par l'intermédiaire du revêtement thermoplastique (6), caractérisé en ce que l'assemblage est effectué en apportant du matériau thermoplastique supplémentaire entre les pièces, et par soudage à une température élevée de telle sorte qu'une fusion se produise sur les lignes respectives d'assemblage entre le revêtement thermoplastique, le matériau thermoplastique et l'autre pièce.

2. Procédé selon la revendication 1, dans lequel les pièces (8, 11) comportent des matériaux dissemblables.

3. Procédé d'assemblage de pièces (8, 11) selon la revendication 1 ou la revendication 2, dans lequel les pièces comprennent un métal et un thermoplastique.

4. Procédé selon la revendication 3, dans lequel la pièce thermoplastique comporte un revêtement thermoplastique prévu sur une pièce métallique.

5. Procédé selon la revendication 3 ou la revendication 4, dans lequel un thermoplastique est fourni sur une pièce métallique par un procédé comportant une étape consistant à prétraiter la pièce métallique et à fournir ensuite le revêtement.

6. Procédé selon l'une quelconque des revendications 3 à 5, dans lequel la pièce métallique comporte un alliage d'aluminium.

7. Procédé selon l'une quelconque des revendications 3 à 6, dans lequel le matériau thermoplastique supplémentaire comprend un insert d'implant de résistance revêtu de polymère prévu entre la pièce thermoplastique et le revêtement thermoplastique, la fusion des revêtements polymères sur la pièce thermoplastique et le revêtement thermoplastique s'opérant par chauffage résistif de l'insert.

8. Procédé selon l'une quelconque des revendications 5 à 7, dans lequel le prétraitement comporte une opération d'anodisation.

*Fig.1.*

*Fig.2.*

## Fig.3.

16

15 — 14
15 — 13
— 14
15 — 12
— 14
15 — 13
— 14
15 — 12
— 14
15 — 13
— 14
15 — 12
— 14
15 — 13
— 14
15 — 12
— 14
15 — 13
25 — 14

## Fig.4.

## Fig.5.

## Fig.6

## Fig.7

Fig.8

# Fig. 9.

# Fig. 10.